# EUROPÄISCHE PATENTANMELDUNG

(11) **EP 1 855 214 A1**
(43) Veröffentlichungstag der Anmeldung: **14.11.2007**
(21) Anmeldenummer: 07006787.1
(22) Anmeldetag: 31.03.2007
(51) Int. Cl.: G06F 17/30

(54) **System und Verfahren zur automatieserten Übernahme von technischen Dokumenten und die Verwaltung der übernommenen Daten in einer Datenbank**

(30) Priorität: 08.05.2006 DE 102006021542; 23.02.2007 DE 102007008904
(71) Anmelder: ABB Technology AG, 8050 Zurich (CH)
(72) Erfinder: Beer, Peter, Dipl.-Ing., 68307 Mannheim (DE); Kohlmeyer, Christian, 67265 Grünstadt (DE)
(74) Vertreter: Miller, Toivo

(57) **Zusammenfassung**

Die Erfindung betrifft ein System und ein Verfahren zur automatisierten und strukturierten Übernahme von technischen Dokumenten und die Verwaltung der übernommenen Dokumente in einer Datenbank eines Engineering- Prozesses oder eines Engineering- Projektes mit wenigstens einer Datenquelle, in welcher die Dokumente in elektronischer Form gespeichert sind. In der Datenbank sind eine oder mehrere Strukturen zur Ablage der Dokumente implementiert. Die Strukturen sind mittels eines zugeordneten Identifizierungsmerkmales identifizierbar.

Die Datenquelle wirkt mit einem Zuordnungsmodul zusammen, welches jedem Dokument eine Dokumentenidentifizierungsnummer zur eindeutigen Zuordnung in eine der Strukturen der Datenbank zuweist. Die Datenquelle wirkt weiterhin mit einem Sortiermodul zusammenwirkt, welches die Dokumente in Abhängigkeit von ihrer Dokumentenidentifizierungsnummer in die mittels des Identifizierungsmerkmales identifizierbare Struktur der Datenbank einsortiert und zur weiteren Verarbeitung bereitstellt.

## Beschreibung

Die Erfindung betrifft ein System zur automatisierten und strukturierten Übernahme von technischen Dokumenten und die Verwaltung der übernommenen Dokumente in einer Datenbank eines Engineering- Prozesses oder eines Engineering- Projektes. Weiterhin bezieht sich die Erfindung auf ein Verfahren mit dem die technische Dokumente, bezogen auf die Gesamtdokumentation des technischen Prozesses oder des technischen Projektes, automatisiert in geeigneten Strukturen abgelegt und verwaltet werden.

Bekannte Verfahren zur strukturierten Ablage von Dokumenten, insbesondere Projekt- und oder Prozessdokumenten, in eine Gesamtdokumentation eines technischen Prozesses oder eines technischen Projekts beruhen auf einer manuellen Einsortierung der entsprechenden Dokumente. Dazu werden die Dokumente aus mehreren Datenquellen, wie beispielsweise Computerprogrammen, dem Internet, HerstellerDokumentationen, von CDs oder externen Datenbanken zusammengestellt und zu einer Gesamtdokumentation zusammengefasst. Diese Vorgehensweise ist durch die manuelle Einsortierung der Dokumente in die Gesamtdokumentation sehr zeitintensiv und fehlerbehaftet. Der Zeitaufwand steigt proportional mit der Anzahl der einzusortierenden Dokumente und ist im Voraus sehr unpräzise abschätzbar. Auch sind die durch die manuelle Einsortierung bedingten Fehler oft nicht reproduzierbar.

Da die manuell zusammengeführte Gesamtdokumentation oft aus verschiedenen Quellen erstellt wird, ist sie zumeist nicht homogen und damit für einen Benutzer nur schwer zu handhaben. Bedingt durch den hohen Zeitaufwand zur manuellen Pflege der Gesamtdokumentation, ist es schwierig den Dokumentationsstand stets aktuell zu halten.

Ausgehend von den beschriebenen Nachteilen liegt der Erfindung die Aufgabe zugrunde, ein System und ein Verfahren zur automatisierten und strukturierten Übernahme von technischen Dokumenten und die Verwaltung der übernommenen Dokumente in einer Datenbank eines Engineering- Prozesses oder eines Engineering-Projektes anzugeben, wodurch vorgenannte Nachteile des Standes der Technik überwunden werden

Diese Aufgabe wird erfindungsgemäß durch ein System der eingangs genannten Art mit den im Anspruch 1 angegebenen Merkmalen gelöst. Vorteilhafte Ausgestaltungen, Verbesserungen des erfindungsgemäßen Systems sowie ein Verfahren zur Ausführung des Systems sind in weiteren Ansprüchen und in der Beschreibung angegeben.

Das erfindungsgemäße System zur automatisierten und strukturierten Übernahme von technischen Dokumenten und die Verwaltung der übernommenen Dokumente in einer Datenbank eines Engineering- Prozesses oder einer Datenbank eines Engineering- Projektes umfasst wenigstens eine Datenquelle, in welcher die Dokumente in elektronischer Form gespeichert sind, wobei die Dokumente in beliebigen Formaten verarbeitbar sind.

Die Datenbank ist vorzugsweise eine Projektdatenbank zur Ablage einer Gesamtdokumentation eines technischen Engineering- Prozesses oder eines technischen Engineering- Projektes. In der Datenbank sind erfindungsgemäß eine oder mehrere Strukturen zur Ablage der Dokumente implementiert, wobei die Strukturen mittels eines zugeordneten Identifizierungsmerkmales identifizierbar sind. Die Strukturen bilden eine Gesamtstruktur, auch als Gesamtdokumentation bezeichenbar. Innerhalb der Gesamtdokumentation ist eine beliebige Anzahl von Strukturen definierbar, denen die jeweils einzusortierenden Dokumente folgen.

Die Datenquelle wirkt mit einem Zuordnungsmodul zusammen, welches jedem Dokument eine Dokumentenidentifizierungsnummer zur eindeutigen Zuordnung in eine der in der Datenbank abgelegten Strukturen zuweist. Die Dokumentenidentifizierungsnummer umfasst somit die Information, in welche Struktur der Gesamtdokumentation das entsprechende Dokument einzuordnen ist.

Die Datenquelle wirkt weiterhin mit einem Sortiermodul zusammen, welches die Dokumente in Abhängigkeit von ihrer Dokumentenidentifizierungsnummer in die mittels des Identifizierungsmerkmales identifizierbare Struktur der Gesamtdokumentation einsortiert und zur weiteren Verarbeitung bereitstellt.

Als Datenquellen zur Bereitstellung der technischen Dokumente werden vorzugsweise elektronische Datensammlungen, wie beispielsweise auf elektronischen Datenträgern gespeicherte Herstellerdokumentationen, im Internet verfügbare Dokumente und/oder externe Datenbanken genutzt. Somit ist durch ein automatisches Referenzieren im Internet und/oder Intranet auf dort verfügbare Dokumente ein Zugriff auf diese Dokumente ausführbar und die Dokumente sind zu einem frei wählbaren Zeitpunkt durch Kopieren in die Struktur übernehmbar. Die durch das automatische Referenzieren im Internet erzeugten Referenz(en) kann/können beispielsweise auf Dokumente innerhalb von prozess-/ projektinterner Netzwerke weisen, ebenso aber auf externe Netzstrukturen, wie auf Gerätebeschreibungen externer Anbieter. Somit sind die Gesamtdokumentation und/ oder Teile derselben zu jedem Zeitpunkt ortsunabhängig und aktuell zu halten.

Die in den Datenquellen gespeicherten Dokumente sind vorzugsweise Projekt- und/oder Prozessdokumente, wie beispielsweise Mess-, Verbraucher- und/oder Kabellisten, MSR- Schemas, Stromlaufpläne, Belegungspläne, Klemmenpläne sowie Schrank- und/oder Gerätedokumentationen.

Zur Verwaltung und Bereitstellung der Dokumentenidentifizierungsnummern für die in den Datenquellen abgelegten Dokumente ist ein Verwaltungsmodul vorgesehen, welches beispielsweise prüft, wie viele Nummern in den zugrunde liegenden, frei wählbaren und/oder noch zu erstellenden Strukturen noch nicht belegt sind.

Die Datenbank, oder Gesamtstruktur, in welche die Dokumente eingeordnet werden ist eine, vorzugsweise zentral verwaltete, Datenbank.

In einer vorteilhaften Ausführungsform der Erfindung ist vorgesehen, während der Einsortierung der Dokumente automatisch ein, vorzugsweise normgerechtes, Inhaltsverzeichnis und ein Deckblatt für die jeweiligen in den einzelnen Strukturen abgelegten Dokumente, auch als Dokumentenpakete bezeichnet, zu erzeugen.

Weiterhin ist vorgesehen, den Dokumenten automatisch eine oder mehrere Zeichnungsnummern zuzuweisen. Bei der Verwaltung der Zeichnungsnummern wird in vorteilhafter Weise geprüft, wie viele Zeichnungsnummern in den zugrunde liegenden, frei wählbaren und/ oder erstellbaren Nomenklaturen noch frei sind und es werden nur die freien Zeichnungsnummern vergeben.

Das Verfahren zur automatisierten und strukturierten Übernahme von technischen Dokumenten und die Verwaltung der übernommenen Dokumente in einer Datenbank eines Engineering- Prozesses oder eines Engineering- Projektes mit dem die Aufgabe weiterhin gelöst wird, ist dem Anspruch 10 zu entnehmen.

Das erfindungsgemäße Verfahren beruht darauf, dass in der Datenbank eine oder mehrere Strukturen zur Ablage der Dokumente implementiert und die Strukturen mittels eines zugeordneten Identifizierungsmerkmales identifiziert werden.

Den in der Datenquelle in elektronischer Form gespeicherten Dokumenten wird mittels eines Zuordnungsmodul jeweils eine Dokumentenidentifizierungsnummer zur eindeutigen Zuordnung in eine der Strukturen der Datenbank zugewiesen und die so gekennzeichneten Dokumente werden mittels eines Sortiermoduls in Abhängigkeit von ihrer Dokumentenidentifizierungsnummer in die mittels des Identifizierungsmerkmales identifizierbare Struktur der Datenbank einsortiert und zur weiteren Verarbeitung bereitstellt.

Durch die Anwendung des erfindungsgemäßem Verfahrens wird in vorteilhafter Weise der von der Gesamtdokumentation beschriebene technische Prozess und/oder das technische Projekt konsistent, aktuell und redundanzfrei bei minimal möglicher Anzahl von Dokumenten in seiner Gesamtheit dokumentiert.

Das erfindungsgemäße Verfahren ermöglicht eine automatisierte Darstellung der Dokumentenstruktur in graphischer Form und unterstützt einen automatisierten Export aller bzw. ausgewählter Dokumente inklusive der zugrunde liegenden Struktur(en) auf einen elektronischen Permanentspeicher, beispielsweise einer Computer-Festplatte oder eine CD-ROM.

Die Vorteile des beschriebenen Verfahrens beruhen weiterhin auf der konsistenten Verwaltung und Erstellung aller Dokumente einer Gesamtdokumentation. Sofern diese Dokumente in der Gesamtdokumentation überhaupt existieren, ist mit Hilfe des erfindungsgemäßem Verfahrens die Vollständigkeit der Dokumentation bezüglich des/der betrachteten Sachverhalte(s) gewährleistet. Die Gesamtdokumentation ist zu jedem, frei wählbaren Zeitpunkt sowohl für den lesenden Gebrauch aus auch für die Aktualisierung reproduzierbar.

Durch die Automatisierung von Arbeitsschritten, wie beispielsweise der Verwaltung und Vergabe der Zeichnungsnummern ist eine Effizienzsteigerung bei der Verfolgung eines technischen Prozesses und/oder Projekts jederzeit möglich.

Das erfindungsgemäße System und Verfahren wird vorzugsweise in der Verfahrens-, Anlagen- oder Leittechnik-Planung zur Erstellung und Verwaltung der Gesamtdokumentation eingesetzt. Findet aber auch Anwendung bei der Erstellung von technischen Dokumentationen für die Verfahrenstechnik, die Anlagentechnik, den Anlagenbau, die Automatisierungstechnik, die Elektrotechnik und die Verkabelung.

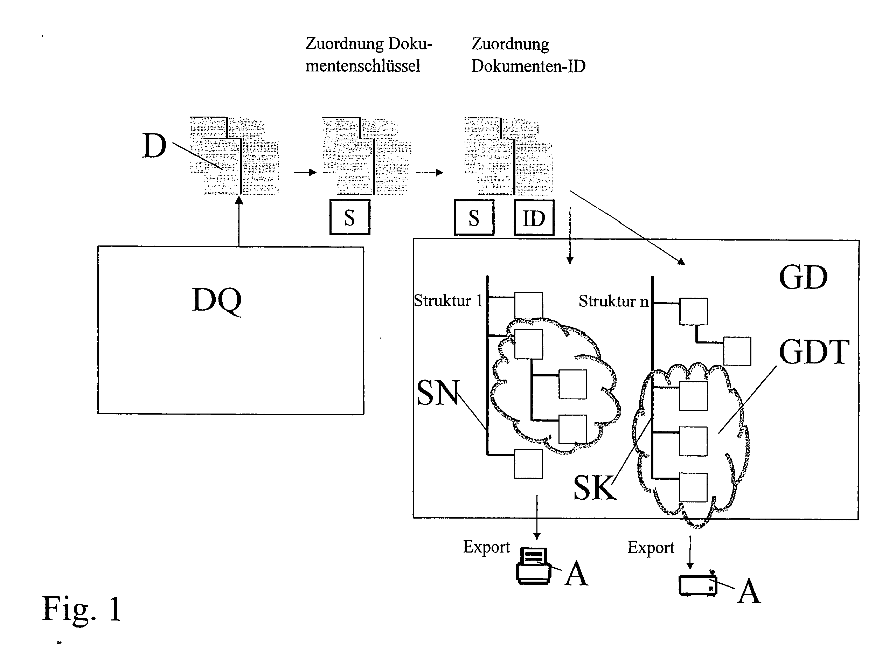

Anhand des in der Figur 1 dargestellten Ausführungsbeispieles sollen die Erfindung sowie vorteilhafte Ausgestaltungen, Verbesserungen und weitere Vorteile der Erfindung näher erläutert und beschrieben werden.

Fig. 1 zeigt eine Ausführungsform des erfindungsgemäßen Systems zur Einsortierung eines technischen Dokuments D in eine Gesamtdokumentation GD, wobei das einzusortierende Element von einer Datenquelle DQ bereitgestellt wird. Dem einzusortierenden Dokument D wird eine eindeutige Dokumentenidentifizierungsnummer ID zugeordnet. Diese Dokumentenidentifizierungsnummer ID folgt einer beliebigen, frei wählbaren Struktur SN, SK, auch als Dokumententypschlüssel S bezeichnet, die beispielsweise einer allgemeinen Norm, einer firmeninternen verwendeten Struktur und/oder einer Kundenstruktur folgt.

Die Gesamtheit aller Dokumentenidentifizierungsnummern ID wird dabei mittels eines nicht dargestellten Verwaltungsmoduls verwaltet, wobei die Dokumentenidentifizierungsnummern ID der eindeutigen Kennzeichnung eines fest definierten Dokumententyps dienen.

Das in die Gesamtdokumentation GD einzuordnenden Dokument D wird in eine zentral verwaltete Datenbank übertragen und in die gewählte(n) Struktur(en) SN, SK einsortiert. Die zentral verwaltete Datenbank bildet dabei die Gesamtdokumentation GD ab.

Weiterhin werden die der Gesamtdokumentation GD zugrunde liegenden Inhaltsverzeichnisse und Deckblätter angelegt und /oder aktualisiert.

In einer vorteilhaften Ausgestaltung der Erfindung ist vorgesehen, mittels einer Exportfunktion die Gesamtdokumentation GS oder Teile der Gesamtdokumentation GDT mit allen oder ausgewählten Dokumenten inklusive der zugrundeliegenden Strukturen einer Ausgabeeinheit A zuzuführen und beispielsweise zu einem elektronischen Datenspeicher zu exportiert oder in Papierform auszudrucken.

## Patentansprüche

1. System zur automatisierten und strukturierten Übernahme von technischen Dokumenten und die Verwaltung der übernommenen Dokumente in einer Datenbank eines Engineering- Prozesses oder eines Engineering- Projektes mit wenigstens einer Datenquelle, in welcher die Dokumente in elektronischer Form gespeichert sind, wobei
- in der Datenbank eine oder mehrere Strukturen zur Ablage der Dokumente implementiert sind,
- die Strukturen mittels eines zugeordneten Identifizierungsmerkmales identifizierbar sind,
- die Datenquelle mit einem Zuordnungsmodul zusammenwirkt, mit welchem jedem Dokument eine Dokumentenidentifizierungsnummer zur eindeutigen Zuordnung in eine der Strukturen der Datenbank zuweisbar sind,
- die Datenquelle weiterhin mit einem Sortiermodul zusammenwirkt, in welches die Dokumente in Abhängigkeit von ihrer Dokumentenidentifizierungsnummer in die mittels des Identifizierungsmerkmales identifizierbare Struktur der Datenbank einsortierbar und weiterverarbeitbar sind.

2. System nach Anspruch 1, **dadurch gekennzeichnet, dass** die Datenbank eine Projektdatenbank zur Erzeugung einer Gesamtdokumentation für einen technischen Prozess oder eines technisches Projektes ist.

3. System nach einem der vorherigen Ansprüche, **dadurch gekennzeichnet, dass** die Identifizierungsmerkmale Information zur strukturierten Einordnung der Dokumente in die Strukturen der Datenbank enthalten.

4. System nach einem der vorherigen Ansprüche, **dadurch gekennzeichnet, dass** die Datenquellen elektronische Datensammlungen, wie beispielsweise auf elektronischen Datenträgern gespeicherte Herstellerdokumentationen, im Internet verfügbare Dokumente und/oder externe Datenbanken sind.

5. System nach einem der vorherigen Ansprüche, **dadurch gekennzeichnet, dass** die in den Datenquellen gespeicherten Dokumente Projekt- und/oder Prozessdokumente sind.

6. System nach einem der vorherigen Ansprüche, **dadurch gekennzeichnet, dass** zur Verwaltung und Bereitstellung der Dokumentenidentifizierungsnummern für die in den Datenquellen abgelegten Dokumente ein Verwaltungsmodul vorgesehen ist.

7. System nach einem der vorherigen Ansprüche, **dadurch gekennzeichnet, dass** die Datenbank zur Übernahme und Verwaltung der übernommenen Dokumente eine zentral verwaltete Datenbank ist.

8. System nach einem der vorherigen Ansprüche, **dadurch gekennzeichnet, dass** während der Einsortierung der Dokumente automatisch ein Inhaltsverzeichnis und ein Deckblatt für die jeweiligen in den einzelnen Strukturen abgelegten Dokumente erzeugbar ist.

9. System nach einem der vorherigen Ansprüche, **dadurch gekennzeichnet, dass** den Dokumenten automatisch eine oder mehrere Zeichnungsnummern zuweisbar sind.

10. Verfahren zur automatisierten und strukturierten Übernahme von technischen Dokumenten und die Verwaltung der übernommenen Dokumente in eine Datenbank eines Engineering- Prozesses oder eines Engineering- Projektes mit wenigstens einer Datenquelle, in welcher die Dokumente in elektronischer Form gespeichert werden, wobei
- in der Datenbank eine oder mehrere Strukturen zur Ablage der Dokumente implementiert werden,
- die Strukturen mittels eines zugeordneten Identifizierungsmerkmales identifiziert werden,
- den in der Datenquelle gespeicherten Dokumenten mittels eines Zuordnungsmodul jeweils eine Dokumentenidentifizierungsnummer zur eindeutigen Zuordnung in eine der Strukturen der Datenbank zugewiesen wird,
- die Dokumente mittels eines Sortiermoduls in Abhängigkeit von ihrer Dokumentenidentifizierungsnummer in die mittels des Identifizierungsmerkmales identifizierbare Struktur der Datenbank einsortiert und zur weiteren Verarbeitung bereitstellt werden.

11. Verfahren nach Anspruch 10, **dadurch gekennzeichnet, dass** die Dokumentenidentifizierungsnummern von einem Verwaltungsmodul bereitgestellt und verwaltet werden.

12. Verfahren nach einem der Ansprüche 10 oder 11, **dadurch gekennzeichnet, dass** während der Einsortierung der Dokumente automatisch ein Inhaltsverzeichnis und ein Deckblatt für die jeweiligen in den einzelnen Strukturen abgelegten Dokumente erzeugt wird.

13. Verfahren nach einem der Ansprüche 10 bis 12, **dadurch gekennzeichnet, dass** den Dokumenten automatisch eine oder mehrere Zeichnungsnummern zugewiesen wird.

14. Verwendung des Systems und Verfahrens nach einem der vorherigen Ansprüche zur in der technischen Planung, insbesondere in der Verfahrenstechnik, der Anlagentechnik, dem Anlagenbau, der Automatisierungstechnik, der Elektrotechnik oder Verkabelung.
